# EUROPÄISCHE PATENTANMELDUNG

(11) **EP 2 418 127 A2**
(43) Veröffentlichungstag der Anmeldung: **15.02.2012**
(21) Anmeldenummer: 11174332.4
(22) Anmeldetag: 18.07.2011
(51) Int. Cl.: B60R 16/02

(54) **Durchführungstülle für eine Leitung und Vorratstank mit einer Öffnung zur Durchführung von mindestens einer Leitung**

(30) Priorität: 09.08.2010 DE 102010039043
(71) Anmelder: Robert Bosch GmbH, 70442 Stuttgart (DE)
(72) Erfinder: Haeberer, Rainer, 75015 Bretten (DE)

(57) **Zusammenfassung**

Durchführungstülle für mindestens eine Leitung, die es ermöglicht, eine Saugleitung und/oder mindestens eine elektrische Leitung dichtend aus einem Vorratstank herauszuführen, ohne die Leitungen unterbrechen zu müssen.

## Beschreibung

### Stand der Technik

Die Erfindung betrifft eine Durchführungstülle für mindestens eine Leitung sowie einen Vorratstank mit einer Öffnung zur Durchführung von mindestens einer Leitung.

Aus der DE 10 2006 012 855 A1 ist eine Abgasnachbehandlungseinrichtung mit einem Katalysator zur selektiven katalytischen Reduktion (SCR-Verfahren) bekannt bei der flüssiges Reduktionsmittel mit einem Fördermodul aus dem Vorratstank über eine Saugleitung zu einem Dosiermodul gepumpt wird. Da das Reduktionsmittel bei Temperaturen unterhalb von - 8°C gefriert und das Reduktionsmittel dann nicht mehr zu dem Dosiermodul gepumpt werden kann, müssen Vorkehrungen getroffen werden, um die Funktionsfähigkeit der Abgasnachbehandlungseinrichtung auch bei den genannten tiefen Temperaturen zu gewährleisten. Eine Möglichkeit besteht darin, eine elektrische Heizeinrichtung in dem Vorratsbehälter vorzusehen. Die Versorgung der Heizeinrichtung erfolgt über zwei elektrische Leitungen, die ebenso wie die Saugleitung dichtend aus dem Vorratstank herausgeführt werden muss.

### Offenbarung der Erfindung

Ein Gedanke der Erfindung ist es, die Saugleitung und die elektrischen Leitungen zusammen durch eine Öffnung in einer Wand des Vorratstanks zu führen. Die Abdichtung erfolgt dabei mit Hilfe einer erfindungsgemäßen Durchführungstülle, welche die Saugleitung und die elektrischen Leitungen separat radial umschließt. Dadurch ist es möglich, eine Saugleitung und/oder mindestens eine elektrische Leitung dichtend aus dem Vorratstank herauszuführen, ohne die Leitungen unterbrechen zu müssen. Dadurch werden die Dichtheit des Vorratstanks über die gesamte Lebensdauer des Systems verbessert sowie der apparative Aufwand und in Folge dessen die Fertigungskosten reduziert.

Als weiterer Vorteil ist zu erwähnen, dass dadurch auch die Durchführungstülle gut beheizt und der Übergangsbereich der Saugleitung aus dem Tankinneren ohne Weiteres aufgetaut wird.

Eine fertigungstechnisch einfache Lösung sieht vor, dass die Durchführungstülle aus einem Elastomer gefertigt ist. Diese Kunststoffe können sich bei Zug- und Druckbelastung elastisch verformen, finden aber danach wieder in ihre ursprüngliche, unverformte Gestalt zurück. Damit lassen sich auch komplizierte Geometrien durch einfache Gussverfahren herstellen bzw. die Durchführungstülle ist einfach, sowohl an den Leitungen als auch in der Öffnung des Vorratstanks, so zu montieren, dass sie die Leitungen radial mit leichter Pressung umschließt. Dadurch wird die Dichtheit verbessert oder erst ermöglicht.

Ergänzend wird vorgeschlagen, dass eine Ausnehmung für die Leitungen in der Durchführungstülle im Längsschnitt ein Wellenprofil aufweist. Da sich das Wellenprofil über den gesamten Umfang erstreckt, wirken die "Wellenberge" wie Rippen und die abzudichtende Fläche zwischen Leitung und Durchführungstülle wird, verglichen mit einer glatten Oberfläche, reduziert. Dadurch wird eine lokale Abdichtung durch die Anpresskräfte erzielt, die aus der erfindungsgemäßen leichten Pressung zwischen den die Leitungen und der Durchführungstülle resultieren.

Weiterhin wird vorgeschlagen, dass die Durchführungstülle am Aussendurchmesser mindestens eine umlaufende Rippe aufweist. Damit wie vorangehend ausgeführt die abzudichtende Fläche zwischen Tankwand und Durchführungstülle reduziert, was eine verbesserte lokale Abdichtung zu Folge hat. Zudem erleichtern diese Rippen eine Montage der Durchführungstülle vom Tankinneren aus.

Eine vorteilhafte Ausgestaltung der Erfindung sieht vor, dass die Durchführungstülle an ihrer nach außen weisenden Seite über mindestens eine beispielsweise zylindrische Ausstülpung verfügt. Damit wird einerseits die Dichtheit gewährleistet, andererseits stellt die Ausstülpung eine Art Wärmedämmung dar, die den Bereich der Saugleitung, der nicht unmittelbar durch die Begleitheizung beheizt ist, vor Kälteeinwirkung schützt.

Vorteilhafterweise wird mit der Durchführungstülle eine Öffnung für mindestens eine Leitung in einer Wand eines Vorratstanks abgedichtet. Dadurch wird die Durchführung einer Saugleitung und der elektrischen Leitungen aus dem Tankinneren nach außen ohne Übergabe durch einen Deckel, ohne zusätzliche Adapter und ohne eine zusätzliche, beheizte Saugleitung ermöglicht.

Vorzugsweise erfolgt die Durchführung der Leitungen an der in Einbaulage oberen Seite des Vorratstanks. Die Durchführung ist auch an jeder beliebigen, montagetechnisch günstig gelegenen Stelle der Tankwand möglich.

Besonders hilfreich ist es, wenn die Öffnung an ihrem, dem Tankinnenraum zugewandten, Ende eine Verengung aufweist. Damit kann die Durchführungstülle bei axialem Druck von außen nicht in den Tankinnenraum rutschen.

Eine weitere vorteilhafte Ausgestaltung der Erfindung sieht vor, dass die Durchführungstülle durch mindestens ein Joch in der Öffnung des Vorratstanks fixiert wird. Damit wird einerseits ein axiales Verrutschen der Durchführungstülle verhindert. Andererseits führt die axial aufgebrachte Kraft zu einem Aufweiten der Durchführungstülle. Damit wird eine zusätzliche radial wirkende Anpresskraft erzeugt, welche die Dichtheit steigert.

Besonders hilfreich ist es, wenn das Joch über kammartige Ausformungen verfügt, welche die abzudichtenden Leitungen und die Ausstülpungen der Durchführungstülle auf, im Wesentlichen, gleicher axialer Höhe von beiden Seiten halbkreisförmig umschließen. Damit werden die Leitungen abgedichtet.

Ergänzend wird vorgeschlagen, dass das Joch aus einem Kunststoff gefertigt ist. Werkstücke aus Kunststoff sind einfach und kostengünstig in großen Stückzahlen herzustellen.

Eine fertigungstechnisch einfache Lösung ist es, wenn der Vorratstank eine Montageöffnung aufweist. Dadurch wird es möglich die Filtereinrichtung, die Saugleitung mit elektrischen Leitungen, die Durchführtülle sowie den Schrumpfschlauch vorab zu montieren und dann als Einheit von innen im Tank zu installieren. Die Montageöffnung wird anschließend dichtend verschlossen, beispielsweise durch Einschweißen einer Platte. Denkbar ist es auch, die Durchführung mit der Durchführtülle in einem Deckel anzuordnen, welcher dann die Montageöffnung verschließt.

Weitere Vorteile ergeben sich aus der nachfolgenden Beschreibung und den beigefügten Figuren. Ausführungsbeispiele der Erfindung sind in den Figuren dargestellt und werden in der nachfolgenden Beschreibung näher erläutert. Es zeigen, jeweils in schematischer Form:
- Fig. 1: eine Fördereinrichtung mit einem Vorratstank;
- Fig. 2: eine Schnittdarstellung einer Durchführung
- Fig. 3: eine Draufsicht der Durchführung

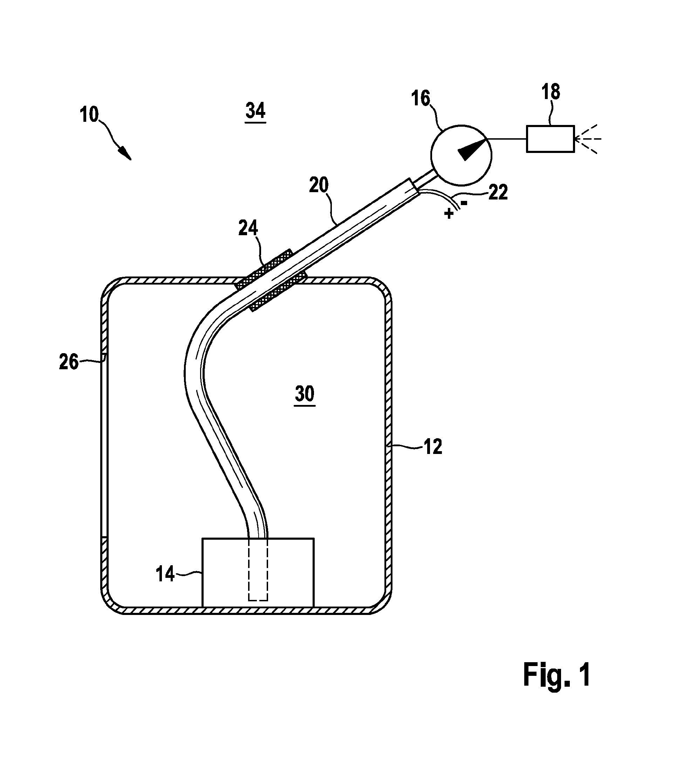

Fig. 1 zeigt schematisch eine Fördereinrichtung 10 mit einer Vorratstank 12. Die Fördereinrichtung 10 umfasst eine am Boden des Vorratstanks 10 angeordnete Filtereinrichtung 14 und eine elektrische Heizeinrichtung, ein als Pumpe 16 ausgebildetes Fördermodul und stromabwärts ein Dosiermodul 18.

Die Filtereinrichtung 14 kann als Filtergewebe oder - vlies ausgebildet sein. Die im Bereich der Filtereinrichtung 14 angeordnete Heizeinrichtung ist als elektrische Widerstandsheizung ausgebildet und ist in Figur 1 nicht gesondert dargestellt. Im Zusammenhang mit der Erfindung ist von Bedeutung, dass die Heizeinrichtung 14 über zwei elektrische Leitungen 22 mit elektrischer Energie versorgt wird. Dabei sind die elektrischen Leitungen 22 als Widerstandsheizungen ausgebildet und verhindern so das Einfrieren des flüssigen Reduktionsmittels in einer Saugleitung 20. Die Saugleitung 20 verbindet die Filtereinrichtung 14 mit der Pumpe 16. Somit ist es möglich bedarfsgerecht flüssiges Reduktionsmittel mit Hilfe der Pumpe 16 aus dem Vorratstank 12 zum Dosiermodul 18 zu fördern.

Die elektrischen Leitungen 22 und die Saugleitungen 20 sind von einem Schrumpfschlauch 23 umschlossen, um eine gute Wärmeübertragung zu gewährleisten. Die elektrischen Leitungen 22 bilden somit eine Begleitheizung für die Saugleitung 20.

Eine Durchführung 24 der Saugleitung 20 durch den Vorratstank 12 erfolgt vorzugsweise an der in Einbaulage oberen Seite des Vorratstanks 12. Dabei muss die Durchführung der Saugleitung 20 und der elektrischen Leitungen 22 selbstverständlich über die gesamte Lebensdauer der Vorratstanks 12 flüssigkeitsdicht sein, um zu verhindern, dass Reduktionsmittel aus dem Vorratstank 12 austritt.

Damit die Filtereinrichtung 14, die Heizeinrichtung und die Saugleitung 20 vom Tankinnenraum 30 nach außen, ohne Übergabe durch einen Deckel, ohne zusätzlichen Adapter und ohne zusätzliche beheizte Saugleitung montiert werden kann, ist in einer Seitenwand des Vorratstanks 12 eine Montageöffnung 26 ausgebildet. Die Montageöffnung 26 wird nach erfolgter Montage dichtend verschlossen, zum Beispiel durch eine eingeschweißte Platte (nicht dargestellt).

Die Montageöffnung 26 ist so gestaltet und dimensioniert, dass eine Montage der Heizeinrichtung 14, der Saugleitung 20 und der Durchführung 24 von innen möglich ist.

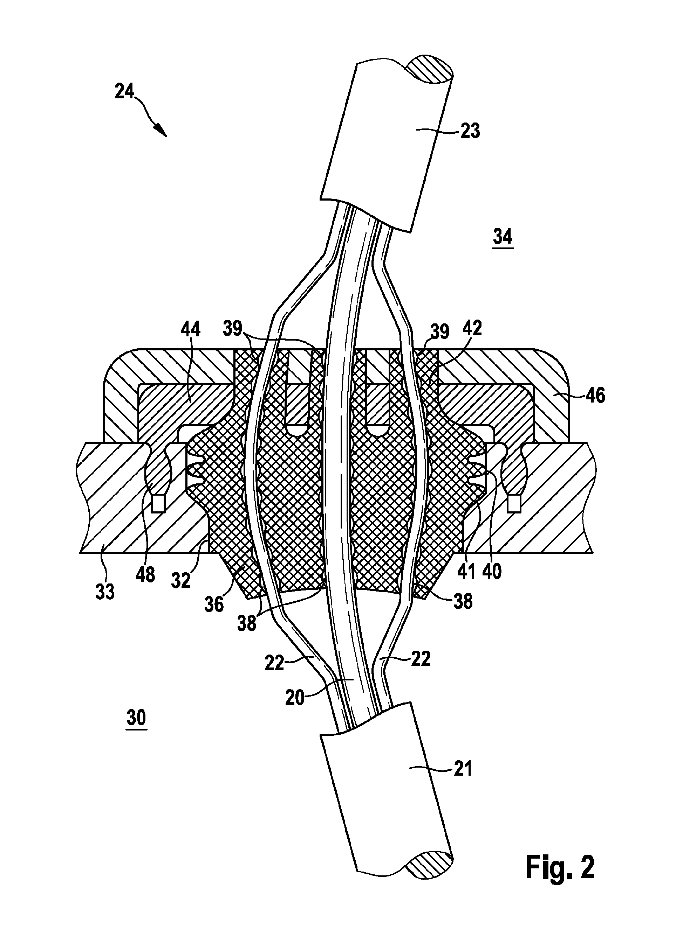

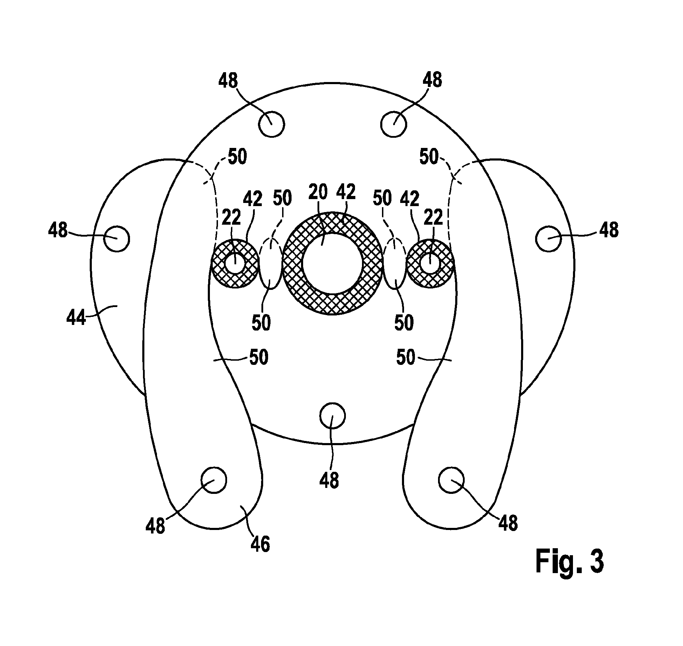

Details der erfindungsgemäßen Durchführung 24 sind den Figuren 2 und 3 entnehmbar auf die nachfolgend Bezug genommen wird.

Fig. 2 zeigt in einer Schnittdarstellung eine Öffnung 32 an der in Einbaulage oberen Seite des Vorratstanks 12 und die erfindungsgemäße Durchführung 24.

In Figur 2 ist ein Schrumpfschlauch 23 gut zu erkennen. Der Schrumpfschlauch 23 fasst Saugleitung 20 und die elektrischen Leitungen 22 (Begleitheizung) zusammen und führt vom Tankinnenraum 30 durch die Öffnung 32 in der Wand 33 nach außen (siehe das Bezugszeichen 34) und von dort weiter zur Pumpe 16.

Im Bereich der Öffnung 32 und der Durchführung 24 ist der Schrumpfschlauch 23 unterbrochen und die elektrischen Leitungen 22 sowie die Saugleitung 20 werden getrennt durch eine Durchführungstülle 36 geführt. Vorzugsweise ist die Durchführungstülle 36 aus einem weichen Elastomer gefertigt. Sie umschließt die Saugleitung 20 und die elektrischen Leitungen 22 mit leichtem Druck, um die gewünschte Dichtheit herzustellen. Dazu verfügt die Durchführungstülle 36 über drei Ausnehmungen 38. Je eine für die beiden elektrischen Leitungen 22 und eine für die Saugleitung 20. Die Ausnehmungen 38 weisen im Längsschnitt ein Wellenprofil 39 auf. Dies bedeutet, dass die Leitungen 20, 22 mehrfach durch umlaufende "Wellenberge" des Wellenprofils 39 mit leichter Vorspannung lokal abgedichtet werden.

An seinem Aussendurchmesser weist die Durchführungstülle 36 mehrere umlaufende Rippen 40 auf, die ebenfalls eine lokale Abdichtung zwischen der Durchführungstülle 36 und der Wand 33 bewirken. Die Öffnung 32 weist an ihrem, dem Tankinnenraum 30 zugewandten, Ende eine Verengung 41 auf, so dass die Durchführungstülle 36 nicht in den Tankinnenraum 30 rutschen kann. An dem entgegengesetzten Ende der Durchführungstülle 36 ist eine beispielhaft zylindrische Ausstülpung 42 ausgebildet. Die Leitungen 20, 22 verlaufen innerhalb der Ausstülpung 42. Die Ausstülpung 42 mit den Leitungen 20 und 22 werden von einem ersten Joch 44 und einem zweitem Joch 46 radial umschlossen. Die Details der erfindungsgemäßen Joche 44, 46 werden nachfolgend anhand von Fig. 3 näher erläutert. Das erste Joch 44 und das zweite Joch 46 sind vorzugsweise aus Kunststoff gefertigt und werden mit Hilfe einer Clip-Verbindung 48 von außen 34 in der Wand 33 des Vorratstanks 12 verankert. Dadurch wird die Durchführungstülle 36 gegen die Einschnürung 41 gepresst. Eine daraus resultierende, radial wirkende Anpresskraft erhöht die Dichtwirkung der Durchführungstülle 36 zusätzlich.

Fig. 3 zeigt in der Draufsicht, wie die Abdichtung und Halterung der Durchführung 24 durch das erste Joch 44 und zweite Joch 46 im Detail realisiert wird. Aus der Zeichnungsebene heraus führt die Saugleitung 20, rechts und links daneben sind die beiden elektrischen Leitungen 22 angeordnet. Die Leitungen 20, 22 sind radial von der Ausstülpung 42 der Durchführungstülle 36 umgeben. Das erste Joch 44 umschließt mit seinen kammartigen Ausformungen 50, vom unteren Figurenrand her, halbkreisförmig den Saugleitung 20 und die beiden Leitungen der Begleitheizung 22. Es wird an seinen Rändern mit Hilfe mehrerer Clip-Verbindungen 48 von außen in der Wand 33 verankert. Das zweite Joch wird über dem ersten Joch so angeordnet, dass es die Leitungen 20 und 22 mit seinen kammartigen Ausformungen 50 von der entgegengesetzten Seite halbkreisförmig umschließt. Das zweite Joch 46 wird an seinen Rändern ebenfalls mit Hilfe mehrerer Clip-Verbindungen 48 von außen in der Wand 33 verankert.

Die kammartigen Ausformen 50 des ersten Jochs 44 und des zweiten Jochs 46 erzeugen eine formschlüssige Verbindung zwischen der Ausstülpungen 42 der Durchführungstülle 36 einerseits, und dem ersten Joch 44 bzw. dem zweiten Joch 46 andererseits, und gleichzeitig wird damit im Bereich der Ausstülpung 42 die Durchführungstülle 36 radial an den Saugleitung 20 bzw. an die beiden Leitungen der Begleitheizung 22 gepresst und somit die Ausnehmungen 38 zusätzlich abgedichtet.

Die Clip-Verbindungen 48 erzeugen eine Axialkraft, welche die Durchführungstülle 36 nach unten zur Wand 28 hin verspannt. Die daraus resultierenden radialen Kräfte bewirken, dass die Durchführungstülle 36 radial an die Öffnung 32 Wand 28 gepresst wird. Verstärkt wird die Dichtwirkung durch die Wellenprofile 39 der Durchführungstülle 36.

## Patentansprüche

1. Durchführungstülle (36) für mindestens eine Leitung (20) mit einer Ausnehmung (38), wobei die Ausnehmung (38) dazu dient, eine Leitung (20) aus dem Inneren eines Vorratstanks (12) dichtend nach außen zu führen, **dadurch gekennzeichnet, dass** die Durchführungstülle (36) mehrere Ausnehmungen (38) aufweist, und dass jede Ausnehmung (38) eine Leitung (20, 22) radial umschließt.

2. Durchführungstülle (36) nach Anspruch 1, **dadurch gekennzeichnet, dass** sie aus einem Elastomer gefertigt ist.

3. Durchführungstülle (36) Anspruch 1 oder 2, **dadurch gekennzeichnet, dass** die Ausnehmungen (38) für die Leitungen (20, 22) im Längsschnitt ein Wellenprofil (39) aufweisen.

4. Durchführungstülle (36) nach einem der vorangehenden Ansprüche, **dadurch gekennzeichnet, dass** ihr Aussendurchmesser mindestens eine umlaufende Rippe (40) aufweist.

5. Durchführungstülle (36) nach einem der vorangehenden Ansprüche, **dadurch gekennzeichnet, dass** sie an einem Ende mindestens eine Ausstülpung (42) aufweist, und dass die mindestens eine Ausstülpung (42) die Leitungen (20, 22) radial umschließt.

6. Vorratstank (12) mit einer Öffnung (32) in einer Wand (28) für mindestens eine Leitung (20, 22),**dadurch gekennzeichnet, dass** eine Durchführungstülle (36) nach den Ansprüchen 1 - 5 die Öffnung (32) abdichtet.

7. Vorratstank (12) nach Anspruch 6, **dadurch gekennzeichnet, dass** die Öffnung (32) an ihrem, einem Tankinnenraum (30) zugewandten, Ende eine Verengung (41) aufweist.

8. Vorratstank (12) nach Anspruch 6 oder 7, **dadurch gekennzeichnet, dass** die Durchführungstülle (36) durch mindestens ein Joch (44, 46), in der Öffnung (32) des Vorratstank (12) fixiert wird.

9. Vorratstank (12) nach einem der Ansprüchen 6 bis 8, **dadurch gekennzeichnet, dass** das Joch (44, 46) kammartige Ausformungen (50) aufweist, und dass die kammartige Ausformungen (50) mit den Ausstülpungen (42) der Durchführungstülle (36) dichtend zusammenwirkt.

10. Vorratstank (12) nach einem der Ansprüche 6 bis 9, **dadurch gekennzeichnet, dass** das Joch (44, 46) aus einem Kunststoff gefertigt ist.

11. Vorratstank (12) nach einem der Ansprüche 6 bis 10, **dadurch gekennzeichnet, dass** er eine Montageöffnung (26) aufweist.

12. Vorratstank(12) nach einem der Ansprüche 6 bis 11, **dadurch gekennzeichnet, dass** er in einer Abgasnachbehandlungseinrichtung zu einer Bevorratung eines flüssigen Reduktionsmittels verwendet wird.
